# EUROPÄISCHE PATENTSCHRIFT

(11) **EP 1 170 049 B1**
(45) Veröffentlichungstag und Bekanntmachung des Hinweises auf die Patenterteilung: **30.08.2006**
(21) Anmeldenummer: 01810619.5
(22) Anmeldetag: 26.06.2001
(51) Int. Cl.: B01D 46/52, B01D 46/42

(54) **Filter mit Reinigungsvorrichtung für gefaltete Staubfilterorgane**
Filter with cleaning device for pleated dust filters
Filtre avec dispositif de nettoyage pour filtres à poussière plissés

(30) Priorität: 07.07.2000 DE 10033102
(43) Veröffentlichungstag der Anmeldung: 09.01.2002
(73) Patentinhaber: HILTI Aktiengesellschaft, 9494 Schaan (LI)
(72) Erfinder: Gerold, Peter, 82362 Weilheilm (DE)
(74) Vertreter: Wildi, Roland

(56) Entgegenhaltungen:
- DE-A- 3 734 355
- DE-A- 3 913 085
- US-A- 3 856 488
- US-A- 4 661 129

## Beschreibung

Die Erfindung bezeichnet einen Filter mit einer Reinigungsvorrichtung für gefaltete Staubfilterorgane, vorzugsweise aus flachem, flexiblen Material, wie Filterpapier und Gewebe.

Derartige Staubfilterorgane werden bspw. als aktives Teil eines Filters in Staubsaugern benutzt. Zur Vergrösserung der Oberfläche der Staubfilterorgane pro Volumen des Filters wird flaches Material üblicherweise in Falten gelegt. Der durch eine Luftdruckdifferenz entstehende und die Staubteilchen mitführende Luftstrom durchdringt das Staubfilterorgan von einer Seite zur anderen, wobei sich der Staub an einer Seite anlagert und schliesslich durch ein Verstopfen der Öffnungen den Luftstrom derart einschränkt, dass der Filter zur zweckentsprechenden Benutzung gereinigt werden muss, was üblicherweise durch ein Entfernen des Filters und ein Ausklopfen erfolgt.

Nach der US3639940 werden als Staubfilterorgane ausgebildete, federnd gelagerte Filterbeutel über eine Reinigungsvorrichtung mit einem Antrieb durch eine exzentrische Bewegung in Vibration gesetzt und durch eine überkritische Beanspruchung der Staubschicht von dieser befreit. Nachteilig ist die Notwendigkeit eines Antriebs.

Die DE3734355A1 offenbart eine in einem Staubsauger integrierte Reinigungsvorrichtung eines in der Horizontalen gefalteten Staubfilterorgans, welches mit einem beweglichen Wischer die an der Unterseite angelagerte Staubschicht zumindest teilweise direkt entfernt. Die gleichzeitig mit dem Kontakt verbundene, zu Vibrationen führende, Erschütterung der jeweils kontaktierten Falte des aus flexiblem Material bestehenden Staubfilterorgans, führt durch eine überkritische Beanspruchung der Staubschicht, verbunden mit deren Ablösung, zu einem weiteren Reinigungseffekt. Der abgelöste Staub fällt frei nach unten. Nachteilig ist bei einer derartigen Lösung der mechanische Kontakt mit aktiv filternden Flächenbereichen des Staubfilterorgans.

Nach der US3591888 wird ein in der Vertikalen gefaltetes Staubfilterorgan eines Staubsaugers durch eine exzentrische Bewegung eines, nach dem Faltenabstand bemessenen, Eingriffkamms an mehreren Falten gleichzeitig kontaktiert und in Vibrationen versetzt. Der abgelöste Staub fällt teilweise auf die gegenüberliegende Falte und letztendlich nach unten.

Über eine Verbindung dieser Reinigungsvorrichtung mit der Kabelrolle wird bei deren Benutzung eine Selbstreinigung des Filters erzielt. Nachteilig ist bei einer derartigen Lösung der mechanische Kontakt mit aktiv filternden Flächenbereichen des Staubfilterorgans sowie der auf aktive Flächenbereiche fallende abgelöste Staub.

Die Aufgabe der Erfindung besteht unter Vermeidung obiger Nachteile in der Realisierung eines weiteren Filters mit einer Reinigungsvorrichtung für gefaltete Staubfilterorgane.

Die Aufgabe wird im wesentlichen durch die Merkmale der unabhängigen Ansprüche gelöst. Vorteilhafte Weiterbildungen ergeben sich aus den Unteransprüchen.

Im wesentlichen wird die Vibration durch einen mechanischen Kontakt eines Kontaktmittels an einer, eine Zick-Zack-Linie ausbildenden, Stirnkante des gefalteten Staubfilterorgans ausgelöst, welche verschleissfester, bspw. herstellungsbedingt doppellagig verklebt, als die aktiven inneren Bereiche und insbesondere die Faltenkanten sind. Die radial zur Achse einwirkende Kontaktbeanspruchung führt zu einer dreidimensionalen Beanspruchung, welche in der Regel unsymmetrisch ist, sowie zum Beulungsverhalten innerhalb einer einzelnen Falte. Durch eine hinreichend schnelle Bewegung der Beanspruchung längs der Achse entsteht zumindest kurzzeitig eine Vibration, welche die Staubschicht entfernt.

Das Kontaktmittel wird vorteilhaft in einer Führungsschiene geführt und weiter vorteilhaft gegen die Rückstellkraft einer in der Symmetrieachse angeordneten Feder bewegt, welche das Kontaktmittel nach Freigabe der auf ein Betätigungsmittel vom Nutzer diskontinuierlich zum zweckentsprechenden Gebrauch einwirkenden Kraft in die Ausgangslage zurückführt, wodurch bei zweckentsprechender Benutzung die Falten zweimal kontaktiert werden.

Vorteilhaft wird der Kontakt auf beiden Stirnkanten aufgebracht, indem ein geeignet dimensionierter Kontaktbügel das gefaltete Staubfilterorgan quer umfasst, beide Stirnkanten kontaktiert und längs der Achse beweglich gelagert ist. Dadurch ist die Beanspruchung weitgehend achsensymmetrisch und eine zusätzliche Gegenlagerung des gefalteten Staubfilterorgans kann entfallen.

Weiterhin vorteilhaft ist ein um eine halbe oder eine Faltenperiode versetzte Zuordnung der beiden Kontaktstellen, wodurch beide Teilflächen einer Falte oder zwei benachbarte Falten gegeneinander deformiert werden, was die Deformation bezüglich gleicher Kraft verstärkt. Der Kontaktbügel ist dazu vorteilhaft gekröpft ausgeführt. Dadurch wird die Anzahl der Kontaktierungen bei einer Bewegung nochmals verdoppelt.

Es ist zudem günstig, das gefaltete Staubfilterorgan als Teil eines herausnehmbaren Filtereinsatzes auszuführen, wobei die Achse vorteilhaft in der Horizontalen liegt und die Staubschicht sich auf der Unterseite anlagert. Der dann vorteilhaft nach oben herausnehmbare Filtereinsatz ist in den unten liegenden Kontaktbügel einsetzbar. Vorteilhaft ist der Kontaktbügel und/oder die Führungsschiene aus dreieckigem Profil ohne waagerecht angeordnete Flächen ausgebildet, damit auf diesen eine Staubablagerung nicht begünstigt wird.

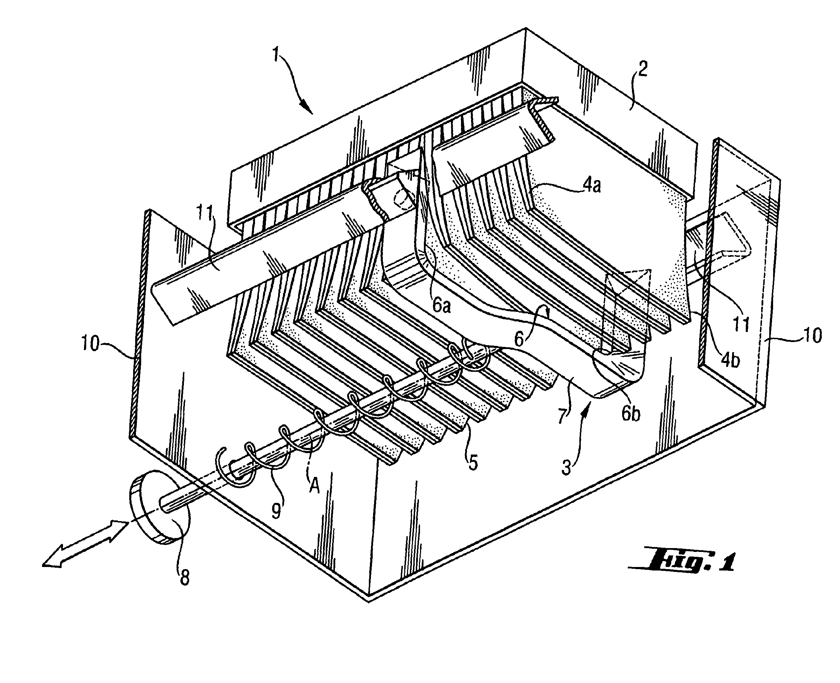

Die Erfindung wird bezüglich eines vorteilhaften Ausführungsbeispiels näher erläutert mit: Fig. 1 als Filter mit Reinigungsvorrichtung.

Nach Fig. 1 weist ein Filter 1 einen Filtereinsatz 2 und eine Reinigungsvorrichtung 3 auf, welche über eine, eine Zick-Zack-Linie ausbildende, Stirnkante 4a/4b des gefalteten Staubfilterorgans 5 des Filtereinsatzes 2 mit einem längs der Achse A beweglichen Kontaktmittel 6 eines Kontaktbügels 7 der Reinigungsvorrichtung 3 in einem mechanischen Kontakt stehen. Der über eine Faltenperiode gekröpfte Kontaktbügel 7, welcher unterhalb des in der Horizontalen angeordneten Filtereinsatzes 2 diesen quer zur Achse A umfassend angeordnet ist, ist mit einem Betätigungsmittel 8 und mit einer Rückstellfeder 9 gegen ein Gehäuse 10 verbunden. Das Kontaktmittel 6 am Kontaktbügel 7 wird in einer Führungsschiene 11 längs der Achse A geführt, wobei alle Teile jeweils aus dreieckigem Profil ausgebildet sind.

## Patentansprüche

1. Filter für die Trennung von staubbeladener Luft, mit einem, ein gefaltetes Staubfilterorgan (5) beinhaltenden, Filtereinsatz (2) und einer mechanisch wirkenden Reinigungsvorrichtung (3), **dadurch gekennzeichnet, dass** die Reinigungsvorrichtung (3) über ein Kontaktmittel (6) mit einer, eine Zick-Zack-Linie ausbildenden, Stirnkante (4a/4b) des gefalteten Staubfilterorgans (5) in einen mechanischen Kontakt bringbar ist und dabei eine Vibration auslöst.

2. Filter nach Anspruch 1, **dadurch gekennzeichnet, dass** das Kontaktmittel (6) längs einer Achse (A) beweglich ist.

3. Filter nach Anspruch 1 oder Anspruch 2, **dadurch gekennzeichnet, dass** beide Stirnkanten (4a, 4b) des gefalteten Staubfilterorgans (5) mit je einem Kontaktmittel (6a, 6b) in einen mechanischen Kontakt bringbar sind.

4. Filter nach Anspruch 3, **dadurch gekennzeichnet, dass** zumindest ein Kontaktmittel (6a, 6b) je Stirnkante (4a, 4b) über einen Kontaktbügel (7) mit der Reinigungsvorrichtung (3) mechanisch verbunden ist.

5. Filter nach Anspruch 4, **dadurch gekennzeichnet, dass** der Kontaktbügel (7) über eine Faltenperiode gekröpft ist.

6. Filter nach einem der vorherigen Ansprüche, **dadurch gekennzeichnet, dass** das Kontaktmittel (6) mit einem Betätigungsmittel (8) und über eine Rückstellfeder (9) mit einem Gehäuse (10) verbunden ist.

7. Filter nach einem der vorherigen Ansprüche, **dadurch gekennzeichnet, dass** das Kontaktmittel (6) in einer Führungsschiene (11) längs der Achse (A) geführt wird.

8. Filter nach einem der vorherigen Ansprüche, **dadurch gekennzeichnet, dass** das Kontaktmittel (6), oder die Führungsschiene (11) oder der Kontaktbügel (7) aus dreieckigem Profil ausgebildet ist.

## Claims

1. Filter for separation of dusty air, comprising a filter insert (2) with a pleated dust filter (5) and a mechanically operating cleaning device (3), **characterised in that** the cleaning device (3) is via a contact means (6) mechanically linked to a front edge (4a/4b), which forms a zig-zag line, of the pleated dust filter (5) whilst triggering a vibration.

2. Filter according to Claim 1, **characterised in that** the contact means (6) is movable along an axis (A).

3. Filter according to Claim 1 or Claim 2, **characterised in that** both front edges (4a, 4b) of the pleated dust filter (5) are mechanically contacted with a respective contact means (6a, 6b).

4. Filter according to Claim 3, **characterised in that** at least one contact means (6a, 6b) per each front edge (4a, 4b) is mechanically linked via a contact strip (7) to the cleaning device (3).

5. Filter according to Claim 4, **characterised in that** the contact strip (7) is cropped over a folded period.

6. Filter according to one of the above claims, **characterised in that** the contact means (6) is via an operating means (8) and a return spring (9) connected to a housing (10).

7. Filter according to one of the above claims, **characterised in that** the contact means (6) is guided in a guide rail (11) along the axis (A).

8. Filter according to one of the above claims, **characterised in that** the contact means (6) or the guide rail (11) or the contact strip (7) are made of triangular profile.

## Revendications

1. Filtre pour le traitement d'air chargé de poussières, avec un élément filtrant (2) contenant un organe plissé de filtrage de poussières (5) et avec un dispositif de nettoyage à action mécanique (3), **caractérisé en ce que** le dispositif de nettoyage (3) peut être amené, par l'intermédiaire d'un moyen de contact (6), en contact mécanique avec un bord frontal conformé en zigzag (4a/4b) de l'organe plissé de filtrage de poussières (5) et déclenche ainsi une vibration.

2. Filtre selon la revendication 1, **caractérisé en ce que** le moyen de contact (6) est mobile le long d'un axe (A).

3. Filtre selon la revendication 1 ou la revendication 2, **caractérisé en ce que** chacun des deux bords frontaux (4a, 4b) de l'organe plissé de filtrage de poussières (5) peut être amené en contact mécanique avec un moyen de contact (6a, 6b).

4. Filtre selon la revendication 3, **caractérisé en ce qu'**au moins un moyen de contact (6a, 6b) par bord frontal (4a, 4b) est relié mécaniquement au dispositif de nettoyage (3) par l'intermédiaire d'un étrier de contact (7).

5. Filtre selon la revendication 4, **caractérisé en ce que** l'étrier de contact (7) est coudé sur une période de plissage.

6. Filtre selon une des revendications précédentes, **caractérisé en ce que** le moyen de contact (6) est relié à un moyen d'actionnement (8) et, par l'intermédiaire d'un ressort de rappel (9), à un carter (10).

7. Filtre selon une des revendications précédentes, **caractérisé en ce que** le moyen de contact (6) est guidé le long de l'axe (A) dans un rail de guidage (11).

8. Filtre selon une des revendications précédentes, **caractérisé en ce que** le moyen de contact (6) ou le rail de guidage (11) ou l'étrier de contact (7) est conformé en profilé triangulaire.
